# EUROPÄISCHE PATENTSCHRIFT

(11) **EP 0 571 828 B1**
(45) Veröffentlichungstag und Bekanntmachung des Hinweises auf die Patenterteilung: **18.02.1998**
(21) Anmeldenummer: 93107820.8
(22) Anmeldetag: 13.05.1993
(51) Int. Cl.: C08G 18/10, C08G 18/12, C08G 18/42, C08G 18/48, C08G 18/74, C08L 75/04, C08K 7/04

(54) **Mehrstufenprozess zur Herstellung von thermoplastisch verarbeitbaren Polyurethan-Elastomeren**
Multi-stage process for the preparation of thermoplastically processable polyurethane elastomers
Procédé en plusieurs étapes de préparation d'élastomères de polyuréthane thermoplastiquement façonnables

(30) Priorität: 26.05.1992 DE 4217364
(43) Veröffentlichungstag der Anmeldung: 01.12.1993
(73) Patentinhaber: BAYER AG, 51368 Leverkusen (DE)
(72) Erfinder: Heidingsfeld, Herbert, Dipl.-Ing., W-5020 Frechen 4 (DE); Bräuer, Wolfgang, Dr., W-5090 Leverkusen 1 (DE); Müller, Friedemann, Dr., W-4040 Neuss (DE); Meister, Willi, Dr., W-4047 Dormagen (DE)

(56) Entgegenhaltungen:
- EP-A- 0 004 937
- EP-A- 0 010 601
- EP-A- 0 135 111
- EP-A- 0 316 150
- DE-A- 2 610 980
- CHEMICAL ABSTRACTS, vol. 118, no. 16, 19. April 1993, Columbus, Ohio, US; abstract no. 149182y, J. T. HAPONIUK ET AL. 'Selected problems related to thermoplastic urethane elastomers' & PRACE NAUKOWE POLITECHNIKI SZCZECINSKI, Nr.443, 1991, SZCZECIN,PL Seiten 113 - 126

## Beschreibung

Die Erfindung betrifft ein Verfahren zur kontinuierlichen Herstellung von thermoplastischen verarbeitbaren Polyurethan-Elastomeren durch einen mehrstufigen Prepolymer/Hochviskosreaktor-Prozeß.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben. TPU's werden aus linearen Polyolen, meist Polyether oder Polyester, organischen Diisocyanaten und kurzkettigen Diolen (Kettenverlängerer) aufgebaut. Sie können kontinuierlich oder diskontinuierlich hergestellt werden. Als die bekanntesten Herstellverfahren werden das sogenannte Bandverfahren und das Extruderverfahren auch technisch genutzt.

Nach der GB 1 057 018 wird aus einer im wesentlichen linearen Polyhydroxylverbindung und überschüssioen organischen Diisocyanat ein Prepolymer bei Temperaturen < 100°C hergestellt, abgekühlt und über eine Dosierpumpe einem Mischkopf zugeführt. Dort mischt man es mit einer bestimmten Menge eines niedermolekularen Diols. Das erhaltene Reaktionsgemisch wird unter Erhitzung auf bis zu 130°C auf ein Förderband gebracht. Es folgt ein Zerkleinern und Tempern des Reaktionsproduktes. Die benötigte lange Reaktionszeit der Prepolymerbildung von 1 bis 2 Stunden ist wirtschaftlich nachteilig bei diesem Verfahren.

Beim Extruderverfahren, das z.B. in der DE 1 964 834 oder DE-OS 2 059 570 beschrieben wird, werden die Aufbaukomponenten Polyhydroxylverbindung, Diisocyanat und niedermolekulare Glykole in den Extruder eingebracht. Diese werden einzeln, vorgemischt beziehungsweise als Voraddukt von Polyhydroxylverbindung und Diisocyanat direkt in den Extruder dosiert und die Reaktion im Extruder unter bestimmten Verfahrensbedingungen durchgeführt. Beispielsweise werden nach EP-A 4937 besonders homogene Produkte erhalten, wenn ein Gemisch aus mindestens Z Glykolen zur Kettenverlängerung eingesetzt wird. Das so hergestellte thermoplastische Polyurethan wird als Strang extrudiert, abgekühlt und zerkleinert. Nachteilig ist, daß die nach diesem Verfahren hergestellten TPU's nicht für alle Anwendungsgebiete gleichbleibend gute Eigenschaften aufweisen. TPU's gleicher Zusammensetzung sind nach dem Extruderverfahren transparent, während sie nach dem Bandverfahren ein opakes Aussehen zeigen. Opake TPU's können gut zu Folien verarbeitet werden, während transparente TPU's hierfür aufgrund ihrer Blockneigung weniger geeignet sind.

Es bestand weiterhin die Aufgabe, nach einem wirtschaftlichen Verfahren zu suchen, mit dem sowohl harte Spritzguß- als auch weiche Folientypen gezielt und kontrolliert herzustellen sind.

Überraschenderweise wurde ein Verfahren zur kontinuierlichen Herstellung von thermoplastisch verarbeitbaren Polyurethanelastomeren gefunden, in dem durch einen mehrstufigen Prozeß, dadurch gekennzeichnet, daß man
A. ein oder mehrere im wesentlichen lineare Polyole mit Molekulargewichten von 500 bis 5.000 mit einem Diisocyanat der allgemeinen Formel OCN-Z-NCO, wobei Z ein zweiwertiges organisches Radikal ist, kontinuierlich in einem Mischaggregat mit hoher Scherenergiemischt,
B. die in Stufe A. hergestellte Mischung kontinuierlich in einem Rohr-Reaktor mit einem Länge/Durchmesser-Verhältnis von 2:1 bis 20:1 bei Reaktionstemperaturen > 100°C im wesentlichen vollstandig zum Prepolymeren umsetzt,
C. das in der Stufe B. hergestellte Prepolymer mit niedermolekularen Diol- und gegebenenfalls Triol- und/oder Diamin-Kettenverlängerern mit Molekulargewichten von 62 bis 500 mischt, wobei insgesamt unter Hinzuziehung sämtlicher Reaktionskomponenten der Stufen A., B. und C. ein NCO/aktives H-Verhältnis von 0,9:1 bis 1,2:1 eingestellt wird,
D. die in der Stufe C) hergestellte Reaktionsmischung kontinuierlich in einem mit hoher Scherenergie arbeitenden Hochviskosreaktor zum vollständigen Umsatz führt und dort gegebenenfalls Hilfsstoffe undloder weitere Komponenten einmischt,
ein Polyurethan hergestellt wird.

Bevorzugte Polyole sind Polyester, Polyether, Polycarbonate oder ein Gemisch aus diesen.

Geeignete Polyetherole können dadurch hergestellt werden, daß man ein oder mehrere Alkxylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-und 2,3-Butylenoxid. Vorzugsweise Anwenduno finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyldiethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Die im wesentlichen linearen Polyetherole besitzen vorzugsweise Molekulargewichte von 500 bis 5.000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiolbutandiol-1,4-polyadipate, 1,6-Hexandiol-neo-pentylglykol-polyadipate, 1,6-Hexandiol-1,4-butandiol-polyadipate und Polycaprolactone. Die Polyesterole besitzen Molekulargewichte von 500 bis 5.000.

Als organische Diisocyanate kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexandiisocyanat, 1-Methyl-2,4-und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und vorzugsweise aromatische Diisocyanate wie 2,4-Toluylendiisocyanat, Gemische aus 2,4- und 2,6-Toluylendiisocyanat, 4,4'-, 2,4'- und 2,2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Dicyclohexylmethandiisocyanat, Isophorondiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat.

Die genannten Diisocyanate können zusammen mit bis zu 15 % (berechnet auf Diisocyanat), aber höchstens soviel eines Polyisocyanates, daß ein thermoplastisch varbeitbares Produkt entsteht, verwendet werden. Beispiele sind Triphenylmethan-4,4', 4''-triisocyanat und Polyphenylpolymethylen-polyisocyanate.

Als Kettenverlängerungsmittel mit dem Molekulargewichten von 62 bis 500 kommen vorzugsweise aliphatische Diole mit 2 bis 14 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di(β-hydroxyethyl)-hydrochinon, (cyclo)aliphatische Diamine, wie z.B. Isophoron-diamin, Ethylendiamin, 1,2-, 1,3-Propylendiamin, N-Methyl-propylendiamin-1,3, N,N'-Dimethylethylen-diamin und aromatische Diamine, wie z.B. 2,4-und 2,6-Toluylen-diamin, 3,5-Diethyl-2,4- und/oder -2,6-toluylen-diamin und primäre ortho-di-, tri- und/oder tetraalkylsubstituierte 4,4'-Diaminodiphenylmethane.

Die Diol-Kettenverlängerer können zusammen mit bis zu 15 % (berechnet auf Kettenverlängerer) aber höchstens soviel eines Triols mit einem Molekulargewicht von bis zu 500, daß ein thermoplastisch verarbeitbares Produkt entsteht, verwendet werden. Beispiele sind Glycerin, Trimethylolpropan und deren niedermolekularen Alkylenoxidaddukte.

Zur Herstellung der TPU können die Aufbaukomponenten, gegebenenfalls in Gegenwart von Katalysatoren, Hilfs mitteln und/oder Zusatzstoffen in solchen Mengen zur Reaktion gebracht werden, daß das Äquivalenzverhältnis von NCO-Gruppen zur Summe der NCO-reaktiven Gruppen, insbesondere der OH-Gruppen der Aufbaukomponenten 0,9:1 bis 1,20:1, vorzugsweise 0,95:1 bis 1,10:1 beträgt.

Geeignete Katalysatoren, welche insbesondere die Reaktion zwischen den NCO-Gruppen der Diisocyanate und den Hydroxylgruppen der Aufbaukomponenten beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0005 bis 0,1 Teilen pro 100 Teilen Polyhydroxyverbindung eingesetzt.

Neben Katalysatoren können den Aufbaukomponenten auch Hilfsmittel und/oder Zusatzstoffe einverleibt werden. Genannt seien beispielsweise Gleitmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Verstärkungsmittel sind insbesondere faserartige Verstärkungsstoffe wie z.B. anorganische Fasern, die nach dem Stand der Technik hergestellt werden und auch mit einer Schlichte beaufschlagt sein können.

Nähere Angaben über die oben genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 beziehungsweise 1964 oder der DE-A 2 901 774 zu entnehmen.

Weitere Zusatzkomponenten, die in das TPU eingearbeitet werden können, sind Thermoplaste, beispielsweise Polycarbonate, Polyester und Acrylnitrilbutadienstyrolterpolymere, insbesondere ABS. Ebenfalls können andere Elastomere wie z.B. Kautschuk, Ethylenvinlacetatpolymere, Styrolbutadiencopolymere sowie andere TPU's verwendet werden. Weiterhin zur Einarbeitung geeignet sind handelsübliche Weichmacher wie z.B. Phosphate, Phthalate, Adipate, Sebacate.

Die Komponenten der Stufe A werden bei Temperaturen oberhalb ihres Schmelzpunktes innig vermischt. Dieses wird vorzugsweise in einem Mischaggregat mit hoher Scherenergie durchgeführt. Beispielsweise können ein Mischkopf, vorzugsweise ein hochtouriger Stachelmischer, oder eine Düse verwendet werden. Die Prepolymerreaktion (Stufe B) sollte erfindungsgemäß im wesentlichen zum vollständigen Umsatz gebracht werden. Vorzugsweise sollten in dieser Stufe mehr als 80 Mol-% Polyol umgesetzt werden. Die Reaktionstemperaturen liegen oberhalb von 100°C, vorzugsweise zwischen 100°C und 250°C. Für den bevorzugten kontinuierlich ablaufenden Prozeß wird ein Rohrreaktor benutzt, dessen Länge so bemessen ist, daß im Zusammenspiel mit der Reaktionstemperatur der oben beschriebene Umsatz gewährleistet ist. Das Länge/Durchmesser-Verhältnis liegt bevorzugt zwischen 2:1 und 20:1. Umgekehrt muß bei konstanter Rohrlänge die Reaktion z.B. über die Temperatur so gesteuert werden, daß der erwähnte Umsatz erreicht wird.

In einer besonders bevorzugten Form werden die Stufen A und B in einem intensiv gerührten Rohrreaktor mit einem Länge/Durchmesser-Verhältnis von 4:1 bis 15:1 durchgeführt. Es kann aber auch die Kombination Düse/Rohrreaktor, gegebenenfalls mit Rührung, verwendet werden.

In der Stufe C wird das in Stufen A und B hergestellte Prepolymer mit den niedermolekularen Diol- und gegebenenfalls Triol- und/oder Diamin-Kettenverlängerern vermischt. In dem bevorzugten kontinuierlichen Prozeß sollte die Mischung direkt nach der weitgehend beendeten Prepolymerreaktion erfolgen. Auch für diese Stufe wird ein mit hoher Scherenergie arbeitendes Mischaggregat bevorzugt. Beispielhaft seien ein Mischkopf, eine Düse oder ein hochtouriger Schneckenextruder mit geringem Mischvolumen genannt. Die Mischung kann auch nach erfolgter Prepolymerreaktion im letzten Teil des oben genannten gerührten Rohrreaktors durchgeführt werden. In der Stufe D wird das in Stufe C hergestellte Reaktionsgemisch direkt in einen mit hoher Scherenergie arbeitenden Hochviskosreaktor kontinuierlich zudosiert und dort zum vollständigen Umsatz gebracht. Bevorzugt werden die bekannten Cokneter insbesondere Extruder, wie z.B. Einwellen- und Zweiwellenextruder sowie Busskneter. Die Temperaturen der Extrudergehäuse werden so gewählt, daß die Kettenverlängerungsreaktion zum vollständigen Umsatz gebracht wird und die mögliche Einarbeitung der oben erwähnten Hilfsstoffe beziehungsweise der weiteren Komponenten bei größtmöglichster Produktschonung durchgeführt werden kann.

In einer besonderen Variante können die Stufen C und D gemeinsam in dem oben beschriebenen Extruder durchgeführt werden. In einer bevorzugten Form wird dabei die Stufe C im ersten Teil des Extruders, der intensiv mischende Schneckenelemente enthält, und die Stufe D im zweiten Teil des Extruders erfolgen.

Nach dem erfindungsgemäßen mehrstufigen Prepolymer-Prozeß können TPU's aufgrund der in jeder Verfahrensstufe optimalen Bedingungen in einem breiten Eigenschaftsspektrum gezielt und kontrolliert mit nur sehr geringen Eigenschaftschwankungen hergestellt werden.

Die so erhaltenen Produkte besitzen sehr gute mechanische Eigenschaften und eignen sich zur Herstellung von Spritzgußartikeln und Polyurethanfolien.

### Beispiel 1

100 Gew.-Teile eines Poly-butandiol-1,4-adipates mit einem Molgewicht von ca. 2.250 wurden auf 120°C erhitzt und mittels einer Zahnradpumpe in ein mit einem Stachelmischer ausgerüstetes Rohr dosiert. Mittels einer zweiten Zahnradpumpe wurden in das gleiche Rohr 40 Gew.-Teile geschmolzenes (50°C) 4,4'-Diphenylmethandiisocyanat (MDI) gepumpt. Das Rohr hat ein Länge/Durchmesser-Verhältnis von 8:1. Die Drehzahl des Mischers betrug ca. 1.500 U/min. Die Dosiergeschwindigkeit stellte man so ein, daß das Prepolymergemisch den Rohrreaktor mit einem Umsatz¹⁾ von ca. 95 Mol-% bezogen auf den Polyester verließ.

Das Prepolymer wurde anschließend kontinuierlich in einem direkt angeschlossenen Mischkopf mit 10,5 Gew.-Teilen Butandiol (60°C), die mittels einer Zahnradpumpe zudosiert wurden, kurz intensiv vermischt.

Das erhaltene Reaktionsgemisch lief direkt in einen Zweischneckenextruder, der von außen auf 140°C bis 200°C beheizt war. Die Drehzahl der Schneckenwelle betrug 300 U/min. Der verwendete Schneckenextruder hatte eine Länge von 2.325 mm und einen Durchmesser von 53 mm.
- ¹⁾ Umsatzbestimmung:: Produktproben wurden in Dibutylaminlösung abgestoppt. Rücktitration mit HCl ergab den nicht umgesetzten Rest-NCO-Gehalt, aus dem der Umsatz berechnet werden kann.

In der Mitte der Schnecke wurden mittels einer Dosierwaage kontinuierlich 0,6 Gew.-Teile Bis-ethylen-stearylamid zugegeben.

Am Ende der Schnecke wurde die heiße Schmelze als Strang abgezogen, im Wasserbad abgekühlt und granuliert. Das Granulat wurde durch Spritzguß zu Prüfkörpern verarbeitet, an denen die in der Tabelle aufgeführten Eigenschaften gemessen wurden.

Die hergestellten Formkörper waren gut entformbar. Die aus den Granulaten erhaltenen Schlauchfolien ließen sich gut extrudieren.

### Beispiel 2

Analog Beispiel 1 wurde das Poly-butandiol-1,4-adipat auf 140°C erhitzt und im Rohrreaktor zum Prepolymer umgesetzt. Die Dosiergeschwindigkeit wurde so erhöht, daß das Prepolymer den Reaktor wiederum mit ca. 95 % Umsatz verließ.

Das Prepolymer und das Butandiol wurden nebeneinander in die erste Gehäuseöffnung des Zweischneckenextruders dosiert. Im ersten Schneckenteil wurden sie nach einer kurzen Förderstrecke durch handelsübliche intensiv mischende Schneckenelemente vermischt. Der zweite Teil der Schnecke diente der Reaktion und der Einarbeitung des Bis-Ethylen-stearylamides analog Beispiel 1.

Die hergestellten Formkörper waren gut entformbar. Die aus den Granulaten erhaltenen Schlauchfolien ließen sich gut extrudieren.

### Beispiel 3

Analog Beispiel 1 wurden 100 Gew.-Teile eines Poly-butandiol-1,4-adipates mit einem Molgewicht von ca. 2.250 mit 114 Gew.-Teilen MDI zum Prepolymer umgesetzt. Das erreichte Umsatzniveau im Rohrreaktor betrug 98 %.

Im Mischkopf wurde das Prepolymer mit einem Gemisch von 35 Gew.-Teilen Butandiol, 1,75 Gew.-Teilen Hexandiol und 1,27 Gew.-Teilen Stearylalkohol vermischt.

Zusätzlich zu den 1,5 Gew.-Teilen Bis-ethylen-stearylamid dosierte man 34 Gew.-Teile eines ABS-Pulvers (Novodur der Firma Bayer) in der Mitte der Schnecke.

Die hergestellten Formkörper waren gut entformbar.

### Beispiel 4

Analog Beispiel 1 wurden 100 Gew.-Teile eines Polybutandiol-ethers mit einem Molgewicht von ca. 1.000 auf 180°C erhitzt um mit 50 Gew.-Teilen MDI zum Prepolymer im Rohrreaktor bis 97 % umgesetzt.

Im Mischkopf wurde das Prepolymer mit 10 Gew.-Teilen Butandiol vermischt. In der Mitte der Schnecke dosierte man 0,6 Gew.-Teile Bis-ethylen-stearylamid.

Die hergestellten Formkörper waren gut entformbar. Die aus den Granulaten erhaltenen Schlauchfolien ließen sich gut extrudieren.

### Beispiel 5

Analog Beispiel 4 wurden zusätzlich zum Bis-ethylenstearylamid in der Mitte der Schnecke 40 Gew.-Teile Benzyloctyladipat dosiert.

Die hergestellten Formkörper waren gut entformbar. Die aus den Granulaten erhaltenen Schlauchfolien ließen sich gut extrudieren.

### Beispiel 6

Analog Beispiel 3 wurden 100 Gew.-Teile eines Polybutandiol-adipates mit einem Molgewicht von ca. 2.250 mit 111 Gew.-Teilen MDI zum Prepolymer umgesetzt. Das erreichte Umsatzniveau im Rohrreaktor betrug 96 %.

Nach der Kettenverlängrung mit 35 Gew.-Teilen Butandiol dosierte man in der Mitte der Schnecke 2,2 Gew.-Teile Bis-ethylen-stearylamid sowie 62 Gew.-Teile einer handelsüblichen PU beschlichteten Glasfaser mit einem Durchmesser von 12 µm und 6 mm Länge.

Die hergestellten Formkörper waren gut entformbar.

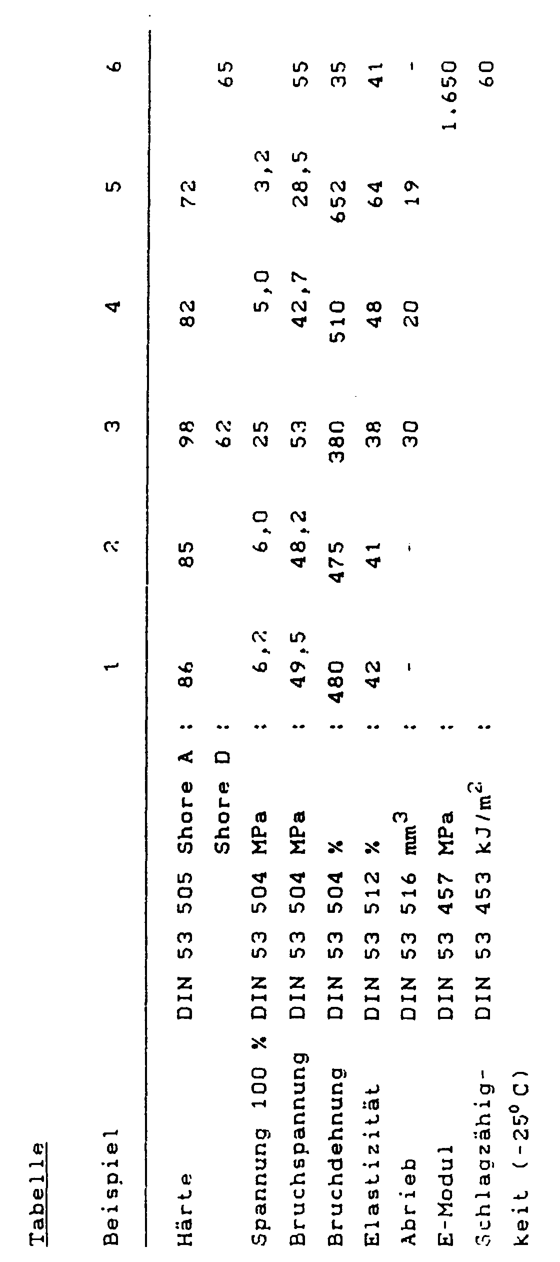

## Patentansprüche

1. Verfahren zur kontinuierlichen Herstellung von thermoplastisch verarbeitbaren Polyurethanelastomeren durch einen mehrstufigen Prozeß, dadurch gekennzeichnet, daß man
A. ein oder mehrere im wesentlichen lineare Polyole mit Molekulargewichten von 500 bis 5.000 mit einem Diisocyanat der allgemeinen Formel OCN-Z-NCO, wobei Z ein zweiwertiges organisches Radikal ist, kontinuierlich in einem Mischaggregat mit hoher Scherenergiemischt,
B. die in Stufe A. hergestellte Mischung kontinuierlich in einem Rohr-Reaktor mit einem Länge/Durchmesser-Verhältnis von 2:1 bis 20:1 bei Reaktionstemperaturen > 100°C im wesentlichen vollständig zum Prepolymeren umsetzt,
C. das in der Stufe B. hergestellte Prepolymer mit niedermolekularen Diol- und gegebenenfalls Triol- und/oder Diamin-Kettenverlängerern mit Molekulargewichten von 62 bis 500 mischt, wobei insgesamt unter Hinzuziehung sämtlicher Reaktionskomponenten der Stufen A., B. und C. ein NCO/aktives H-Verhältnis von 0,9:1 bis 1,2:1 eingestellt wird,
D. die in der Stufe C. hergestellte Reaktionsmischung kontinuierlich in einem mit hoher Scherenergie arbeitenden Hochviskosreaktor zum vollständigen Umsatz führt und dort gegebenenfalls Hilfsstoffe undloder weitere Komponenten einmischt.

2. Verfahren zur Herstellung von thermoplastisch verarbeitbaren Polyurethanelastomeren gemäß Anspruch 1, dadurch gekennzeichnet, daß man
A. ein oder mehrere im wesentlichen lineare Polyester, Polyether, Polycarbonate oder ein Gemisch aus diesen mit Molekulargewichten von 500 bis 5.000 mit einem oder mehreren der Diisocyanate Dicyclohexylmethandiisocyanat. Isophorondiisocyanat, Hexamethylendiisocyanat, Naphthylendiisocyanat oder einem Diphenylmethandiisocyanat-Isomerengemisch mit einem 4,4'-Diphenylmethandiisocyanatgehalt von größer 96 Gew.-% und insbesondere mit 4,4'-Diphenylmethandiisocyanat kontinuierlich in einem Mischaggregat mit hoher Scherenergie mischt,
B. die in Stufe A. hergestellte Mischung kontinuierlich in einem Rohr-Reaktor mit einem Länge/Durchmesser-Verhältnis von 2:1 bis 20:1 bei Reaktionstemperaturen von 100 bis 250°C im wesentlichen vollständig zum Prepolymeren umsetzt,
C. das in der Stufe B. hergestellte Prepolymer mit einem oder mehreren der Kettenverlängerer Ethylenglykol, Butandiol, Hexandiol, 1,4-Di-(betahydroxyethyl)-hydrochinon und gegebenenfalls Triol-Kettenverlängerern kontinuierlich in einem mit hoher Scherenergie arbeitenden Mischaggregat mischt, wobei insgesamt unter Hinzuziehung sämtlicher Reaktionskomponenten der Stufen A., B. und C. ein NCOlaktives H-Verhältnis von 0,95:1 bis 1,1:1 eingestellt wird,
D. die in der Stufe C. hergestellte Reaktionsmischung kontinuierlich in einem Extruder zum vollständigen Umsatz führt und dort gegebenenfalls Hilfsstoffe und/oder weitere Komponenten einmischt.

3. Verfahren zur Herstellung von thermoplastisch verarbeitbaren Polyurethanelastomeren gemäß Anspruch 1 oder 2, dadurch gekennzeichnet, daß die Mischung und die Prepolymer-Reaktion der Stufen A. und B. gemeinsam in einem mit hoher Scherenergie gerührten Rohrreaktor mit einem Länge/Durchmesser-Verhältnis von 4:1 bis 15:1 bei Reaktionstemperaturen von 100°C bis 250°C und einem Umsatz > 80 mol-% bezogen auf das Polyol durchgeführt werden.

4. Verfahren zur Herstellung von thermoplastisch verarbeitbaren Polyurethanelastomeren gemäß Anspruch 1 bis 3, dadurch gekennzeichnet, daß die Stufen C und D in einem Extruder durchgeführt werden, bevorzugt die Stufe C im ersten mit intensiv mischenden Schneckenelementen ausgerüsteten Teil, die Stufe D im zweiten Teil des Extruders.

5. Verfahren zur Herstellung von thermoplastisch verarbeitbaren Polyurethanelastomeren gemäß Anspruch 1 bis 4, dadurch gekennzeichnet, daß in den Extruder als weitere Komponenten ein Thermoplast, insbesondere Polycarbonat, Polyester undloder ABS, oder ein Verstärkungsstoff, insbesondere eine anorganische Faser, oder andere Elastomere und Weichmacher gegeben werden.

## Claims

1. Process for the continuous production of melt-processable polyurethane elastomers by a multi-stage process, characterised in that
A. one or more substantially linear polyols having molecular weights of 500 to 5000 is/are continuously mixed in a high-shear mixing unit with a diisocyanate of the general formula OCN-Z-NCO, wherein Z is a difunctional organic radical,
B. the mixture produced in stage A. is continuously substantially completely reacted to yield the prepolymer at reaction temperatures of >100°C in a tubular reactor having a length/diameter ratio of 2:1 to 20:1,
C. the prepolymer produced in stage B is mixed with low molecular weight diol and optionally triol and/or diamine chain extenders having molecular weights of 62 to 500, wherein an overall NCO/active H ratio, including all reaction components from stages A., B. and C., of 0.9:1 to 1.2:1 is established,
D. the reaction mixture produced in stage C. is continuously taken to complete conversion in a high-shear, high viscosity reactor where auxiliary substances and/or further components are optionally incorporated.

2. Process for the production of melt-processable polyurethane elastomers according to claim 1,
characterised in that
A. one or more substantially linear polyesters, polyethers, polycarbonates or a mixture thereof having molecular weights of 500 to 5000 is/are continuously mixed in a high-shear mixing unit with one or more diisocyanates, dicyclohexylmethane diisocyanate, isophorone diisocyanate, hexamethylene diisocyanate, naphthylene diisocyanate or a diphenylmethane diisocyanate isomer mixture having a 4,4'-diphenylmethane diisocyanate content of greater than 96 wt.% and in particular with 4,4'-diphenylmethane diisocyanate,
B. the mixture produced in stage A. is continuously substantially completely reacted to yield the prepolymer at reaction temperatures of 100 to 250°C in a tubular reactor having a length/diameter ratio of 2:1 to 20:1,
C. the prepolymer produced in stage B is continuously mixed in a high-shear mixing unit with one or more of the chain extenders ethylene glycol, butanediol, hexanediol, 1,4-di-(β-hydroxyethyl)hydroquinone and optionally triol chain extenders, wherein an overall NCO/active H ratio, including all reaction components from stages A., B. and C., of 0.95:1 to 1.1:1 is established,
D. the reaction mixture produced in stage C. is continuously taken to complete conversion in an extruder where auxiliary substances and/or further components are optionally incorporated.

3. Process for the production of melt-processable polyurethane elastomers according to claim 1 or 2, characterised in that the mixing and prepolymer reaction of stages A. and B. are performed together in a tubular reactor stirred with a high-shear stirrer and having a length/diameter ratio of 4:1 to 15:1 at reaction temperatures of 100°C to 250°C and a conversion of >80 mol.%, relative to the polyol.

4. Process for the production of melt-processable polyurethane elastomers according to claims 1 to 3, characterised in that stages C and D are performed in an extruder, stage C preferably in the first section equipped with intensively mixing screw elements and stage D in the second section of the extruder.

5. Process for the production of melt-processable polyurethane elastomers according to claims 1 to 4, characterised in that a thermoplastic, in particular polycarbonate, polyester and/or ABS, or a reinforcing material, in particular an inorganic fibre, or other elastomers and plasticisers are introduced into the extruder as further components.

## Revendications

1. Procédé de préparation continue d'élastomères de polyuréthane thermoplastiquement façonnables par un procédé en plusieurs étapes, caractérisé en ce que
A. on mélange en continu dans un dispositif mélangeur à grande énergie de cisaillement un ou plusieurs polyols sensiblement linéaires ayant des masses moléculaires de 500 à 5000 avec un diisocyanate de formule générale OCN-Z-NCO, Z étant un radical organique divalent,
B. on convertit en continu, sensiblement totalement, en prépolymère le mélange préparé dans l'étape A dans un réacteur tubulaire ayant un rapport longueur/diamètre de 2:1 à 20:1 à des températures de réaction >100°C,
C. on mélange le prépolymère préparé dans l'étape B avec des agents d'allongement de chaîne diols et éventuellement triols et/ou diamines de faible masse moléculaire ayant des masses moléculaires de 62 à 500, en ajustant au total un rapport NCO/H actif de 0,9:1 à 1,2:1 en tenant compte de tous les composants réactionnels des étapes A, B et C,
D. on convertit totalement le mélange réactionnel préparé dans l'étape C en continu dans un réacteur à haute viscosité fonctionnant avec une grande énergie de cisaillement et on y introduit éventuellement des adjuvants et/ou d'autres composants.

2. Procédé de préparation d'élastomères de polyuréthane thermoplastiquement façonnables selon la revendication 1, caractérisé en ce que :
A. on mélange en continu dans un dispositif mélangeur à grande énergie de cisaillement un ou plusieurs polyesters, polyéthers, polycarbonates sensiblement linéaires ou un mélange de ceux-ci ayant des masses moléculaires de 500 à 5000 avec un ou plusieurs des diisocyanates dicyclohexylméthanediisocyanate, isophoronediisocyanate, hexaméthylènediisocyanate, naphtylènediisocyanate ou un mélange d'isomères du diphénylméthanediisocyanate ayant une teneur en 4,4'-diphénylméthanediisocyanate supérieure à 96 % en masse et en particulier avec le 4,4'-diphénylméthanediisocyanate,
B. on convertit en continu, sensiblement totalement, en prépolymère le mélange préparé dans l'étape A dans un réacteur tubulaire ayant un rapport longueur/diamètre de 2:1 à 20:1 à des températures de réaction de 100°C à 250°C,
C. on mélange en continu dans un dispositif mélangeur fonctionnant avec une grande énergie de cisaillement le prépolymère préparé dans l'étape B avec un ou plusieurs des agents d'allongement de chaîne éthylèneglycol, butanediol, hexanediol, 1,4-di-(β-hydroxyéthyl)hydroquinone et éventuellement des agents d'allongement de chaîne triols, en ajustant globalement un rapport NCO/H actif de 0,95:1 à 1,1:1 en tenant compte de tous les composants réactionnels des étapes A, B et C,
D. on convertit totalement en continu le mélange réactionnel préparé dans l'étape C dans une extrudeuse et, dans celle-ci, on introduit éventuellement des adjuvants et/ou d'autres composants.

3. Procédé de préparation d'élastomères de polyuréthane thermoplastiquement façonnables selon la revendication 1 ou 2, caractérisé en ce que le mélange et la réaction conduisant au prépolymère des étapes A et B sont réalisés ensemble dans un réacteur tubulaire agité à grande énergie de cisaillement ayant un rapport longueur/diamètre de 4:1 à 15:1 à des températures de réaction de 100°C à 250°C et avec une conversion >80 mol% par rapport au polyol.

4. Procédé de préparation d'élastomères de polyuréthane thermoplastiquement façonnables selon les revendications 1 à 3, caractérisé en ce que les étapes C et D sont mises en oeuvre dans une extrudeuse, de préférence l'étape C dans la première partie munie d'éléments de vis mélangeant de manière intensive et l'étape D dans la deuxième partie de l'extrudeuse.

5. Procédé de préparation d'élastomères de polyuréthane thermoplastiquement façonnables selon les revendications 1 à 4, caractérisé en ce qu'une matière thermoplastique, en particulier un polycarbonate, un polyester et/ou ABS, ou une substance de renforcement, en particulier une fibre inorganique, ou d'autres élastomères et plastifiants sont introduits dans l'extrudeuse comme autres composants.
